# EUROPÄISCHE PATENTSCHRIFT

(11) **EP 1 199 486 B1**
(45) Veröffentlichungstag und Bekanntmachung des Hinweises auf die Patenterteilung: **23.03.2005**
(21) Anmeldenummer: 00810959.7
(22) Anmeldetag: 17.10.2000
(51) Int. Cl.: F16C 33/10, F01D 25/16

(54) **Hydrodynamisches Axiallager mit Schwimmscheibe**
Hydrodynamic axial bearing with floating disc
Palier axial hydrodynamique avec disque flottant

(43) Veröffentlichungstag der Anmeldung: 24.04.2002
(73) Patentinhaber: ABB Turbo Systems AG, 5400 Baden (CH)
(72) Erfinder: Ammann, Bruno, 5400 Baden (CH); Prossel, Jürgen, 79761 Waldshut-Tiengen (DE)
(74) Vertreter: ABB Patent Attorneys

(56) Entgegenhaltungen:
- DE-A- 19 641 673
- GB-A- 1 095 999
- US-A- 5 246 352

## Beschreibung

### Technisches Gebiet

Die Erfindung betrifft ein hydrodynamisches Axiallager mit Schwimmscheibe gemäss dem Oberbegriff des Patentanspruches 1.

### Stand der Technik

Um in hydrodynamischen Axiallagern, z.B. von Turboladern, das Schiefstellungskompensationsvermögen und das Verschleissverhalten zu verbessern, können zwischen dem mit Wellendrehzahl rotierenden Lagerkamm und dem nichtrotierenden Gehäuse sogenannte Schwimmscheiben eingesetzt sein. Beispiele hierzu finden sich unter anderem in US-1,786,565 und GB-1,095,999. Die Radiale Führung der Schwimmscheibe erfolgt auf dem rotierenden Körper, d.h. auf der Welle bzw. auf dem Lagerkamm durch ein in die Schwimmscheibe integriertes Radiallager, wie es beispielsweise in DE-A-196 41 673 offenbart ist. Die Schmierung eines solchen hydrodynamischen Axiallagers erfolgt in der Regel mittels Schmieröl aus einem eigenen Schmierölsystem oder bei Turboladern via das Schmierölsystem einer mit dem Turbolader verbundenen Brennkraftmaschine.

Im Betrieb baut sich zwischen der mit nur etwa halber Läuferdrehzahl umlaufenden Schwimmscheibe und der Welle bzw. dem Lagerkamm ein tragfähiger Schmierölfilm auf. Bei grossen radialen Schwingungen der Welle z.B. auf Grund von Unwucht, kann es allerdings zu einer Überlastung des Radiallagers der Schwimmscheibe und zu Verschleiss im Radiallager der Schwimmscheibe kommen.

### Darstellung der Erfindung

Aufgabe der vorliegenden Erfindung ist es daher ein hydrodynamisches Axiallager mit Schwimmscheibe zu Verfügung zu stellen, bei dem eine Überlastung des Radiallagers der Schwimmscheibe weitgehend ausgeschlossen ist.

Diese Aufgabe wird gelöst mit einem hydrodynamischen Axiallager gemäss den Merkmalen des Patentanspruches 1.

Durch die radiale Lagerung einer Schwimmscheibe auf einem feststehenden, den rotierenden Körper eines Axiallagers konzentrisch umgebenden Lagerelement werden Schwingungen und Stösse des rotierenden Körpers im Entkopplungsspalt zwischen Lagerelement und rotierendem Körper abgefangen und vom Radiallager der Schwimmscheibe ferngehalten. Eine Überlastung des Radiallagers und Verschleiss im Radiallager der Schwimmscheibe werden dadurch vermieden.

Sehr vorteilhaft ist eine einstückige Ausführung von Lagerelement und Lagerkörper, da dies eine besonders einfache und kostengünstige Herstellung erlaubt.

Aber auch eine zweiteilige Ausgestaltung von Lagerelement und Lagerkörper kann vorteilhaft sein, wenn der Lagerkörper z.B. als Gussteil gefertigt ist und das Lagerelement einen hohen Verschleisswiderstand durch spezielle Materialwahl oder Oberflächenbehandlung erhalten soll.

In einem solchen Fall ist eine feste, unlösbare Verbindung zwischen Lagerelement und Lagerkörper sehr vorteilhaft, da sie die Herstellung und Montage des hydrodynamischen Axiallagers vereinfacht.

Als feste Verbindung zwischen Lagerelement und Lagerkörper ist eine Presspassung sehr gut geeignet. Die Presspassung garantiert das Feststehen des Lagerelementes gegenüber dem rotierenden Körper und der rotierenden Schwimmscheibe, sie ist einfach in der Herstellung und sicher im Betrieb.

Das Lagerelement weist für die Presspassung ein im Presssitz gehaltenes Passteil auf. Besonders vorteilhaft ist es, das Passteil mit einer Ausnehmung zu versehen. Auf diese Weise kann das Lagerelement einfacher in den Presssitz eingepasst werden, und es kann die Deformation des Lagerelementes im Bereich des Lagersitzes - hervorgerufen durch die Presspassung - gering gehalten werden. Die Ausnehmung kann sehr günstig zugleich als Schmierölreservoir für die Schmierung der Schwimmscheibe genutzt werden.

Besonders vorteilhaft ist es, als Lagerelement eine geschlossene Büchse vorzusehen um eine Verminderung der Entkopplungseigenschaften durch Schmieröl im Entkopplungsspalt weitgehend zu vermeiden.

Der Entkopplungsspalt zwischen Lagerelement und rotierendem Körper kann mit Vorteil als breiter Toleranzspalt ausgebildet sein. In den Entkopplungsspalt eindringendes Schmieröl kann dann die Entkopplungseigenschaften nicht vermindern.

Vorteilhaft kann das Lagerelement derart ausgestaltet sein, dass via das Lagerelement Schmieröl in das Radiallager der Schwimmscheibe und in die sie umgebenden Schmierspalte gelangt.

Hierfür kann z.B. das Lagerelement mit einer Schmierölzuführung in leitende Verbindung gebracht sein und die mit der Schwimmscheibe zusammenwirkende Oberfläche des Lagerkörpers kann derart profiliert sein, dass via dieses Profil eine für das Schmieröl durchlässige Verbindung zwischen den Schmierölspalten besteht. Ein solches Profil kann so ausgestaltet sein, dass es als hydrodynamisches Radiallager für die Schwimmscheibe funktioniert und die Schwimmscheibe selber kein integriertes Radiallager aufweisen muss.

Auch können im Lagerkörper Verbindungsöffnungen vorgesehen sein, welche in das Radiallager und die Schmierspalte münden und mit einer Schmierölzuleitung in Verbindung stehen, so dass das Schmieröl direkt in die Schmierölspalte und das Radiallager eingespeist werden kann. Diese Verbindungsöffnungen können zusätzlich zu dem Profil oder auch ohne Profil auf der Aussenseite des Lagerelementes vorgesehen sein.

Weitere bevorzugte Ausführungsformen des hydrodynamischen Axiallagers sind Gegenstand weiterer abhängiger Patentansprüche.

### Kurze Beschreibung der Zeichnungen

Im Folgenden wird der Erfindungsgegenstand anhand des Standes der Technik und zweier bevorzugter Ausführungsbeispiele näher erläutert. Es zeigen rein schematisch:
- Fig.: 1: Ein hydrodynamisches Axiallager mit Schwimmscheibe gemäss Stand der Technik im Schnitt entlang der Längsachse des rotierenden Körpers des Axiallagers; und
- Fig.: 2 bis 5: verschiedene Ausführungsformen des erfindungsgemässen hydrodynamischen Axiallagers mit Schwimmscheibe im Schnitt entlang der Längsachse des rotierenden Körpers des Axiallagers.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

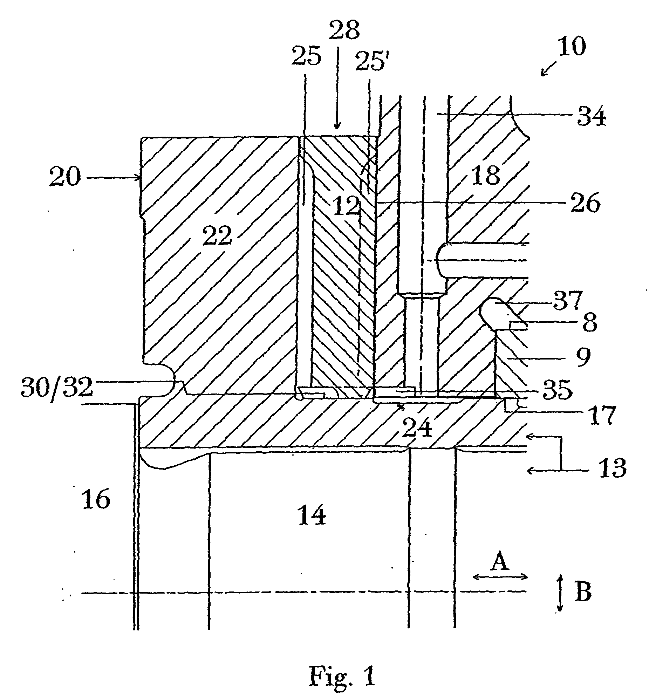

Die Figur 1 zeigt ein hydrodynamisches Axiallager 10 mit einer Schwimmscheibe 12 gemäss Stand der Technik, wie es z.B. in einem Turbolader verwendet wird. Das Axiallager 10 umfasst einen Lagerkörper 18, in dem ein Radiallager 17 zur radialen Lagerung eines rotierenden Körpers 13 ausgebildet ist. Das Radiallager 17 ist durch ein Radiallagerelement 9 verwirklicht, das in eine Radiallagerausnehmung 8 des Lagerkörpers 18 eingepasst ist. Der rotierende Körper 13 umfasst in diesem Beispiel eine Welle 16 mit einem Lagerzapfen 14 und einem Lagerkamm 20. Der Lager kamm 20 weist einen senkrecht von der Welle 16 radial nach aussen abstehenden, kreisscheibenförmiger Vorsprung 22 und einen den Lagerzapfen 14 umfassenden, und sich in Achsrichtung (A) erstreckenden Teil 24 auf. Der Lagerzapfen 14 und der Lagerkamm 20 sind fest miteinander verbunden, z.B. mittels Presspassung, so dass der Lagerkamm 20 mit gleicher Drehzahl mit der Welle 16 mitrotiert. Lagerzapfen 14 und Teil 24 des Lagerkammes 20 erstrecken sich in das Radiallager 17 hinein und werden von diesem aufgenommen.

Der Vorsprung 22 des Lagerkammes 20 befindet sich ausserhalb des Radiallagers 17 und bildet zusammen mit einer Wand 26 des Lagerkörpers 18 einen ringnutenförmigen Raum 28. In diesem Raum 28 ist die Schwimmscheibe 12 angeordnet. Der Raum 28 und die Schwimmscheibe 12 sind so dimensioniert, dass zwischen der Schwimmscheibe 12 und der Wand 26 sowie zwischen der Schwimmscheibe 12 und dem Vorsprung 22 Schmierölspalte 25, 25' vorhanden sind. Die Schwimmscheibe 12 bzw. die Wand 26 und der Vorsprung 22 sind begrenzend zum jeweiligen Schmierölspalt 25, 25' derart profiliert, dass die Anordnung im Betrieb mit dem in den ringnutenförmigen Raum 28 eingespeisten Schmieröl ein hydrodynamisches Axiallager bildet. Die Schwimmscheibe 12 weist eine zentrale Kreisöffnung 30 auf, mit der sie radial auf dem rotierenden Körper 13 gelagert ist. Die zentrale Kreisöffnung 30 ist als hydrodynamisches Radiallager 32 der Schwimmscheibe 12 ausgebildet und bildet im Betrieb mit dem in den ringnutenförmigen Raum 28 eingespeisten Schmieröl einen das Radiallager 32 schmierenden Schmierölfilm aus. Via die profilierte Kreisöffnung 30 ist auch die Schmierölversorgung des zwischen Schwimmscheibe 12 und Vorsprung 22 ausgebildeten Schmierölspaltes 25' gewährleistet. Ein Beispiel für eine solche Profilierung der Schwimmscheibe 12 bzw. der den Raum 28 begrenzenden Elemente 22, 26 sowie für die Ausbildung des Radiallagers ist in DE-A_196 41 673 beschrieben.

Das Schmieröl wird aus einem eigenen Schmierölsystem oder, beispielsweise bei einem Turbolader aus dem Schmierölsystem einer an den Turbolader angeschlossenen Brennkraftmaschine, zugeführt (nicht dargestellt). Die Zuführung erfolgt in bekannter Weise z.B. über einen radialen Zuführkanal 34, der an seinem radial innen liegenden Ende durch einen Ringkanal 35 mit dem ringnutenförmigen Raum 28 verbunden ist. Auch das Radiallager 17 wird mit Schmieröl versorgt, das via einen Ölkanal 37 abgeführt wird. Bei grossen radialen Schwingungen (Pfeil B) des rotierenden Körpers 13 kann es zu einer Überlastung des Schmierölfilms zwischen Schwimmscheibe 12 und rotierendem Körper 13 kommen. Verschleiss oder gar Havarie des Lagers sind die Folge.

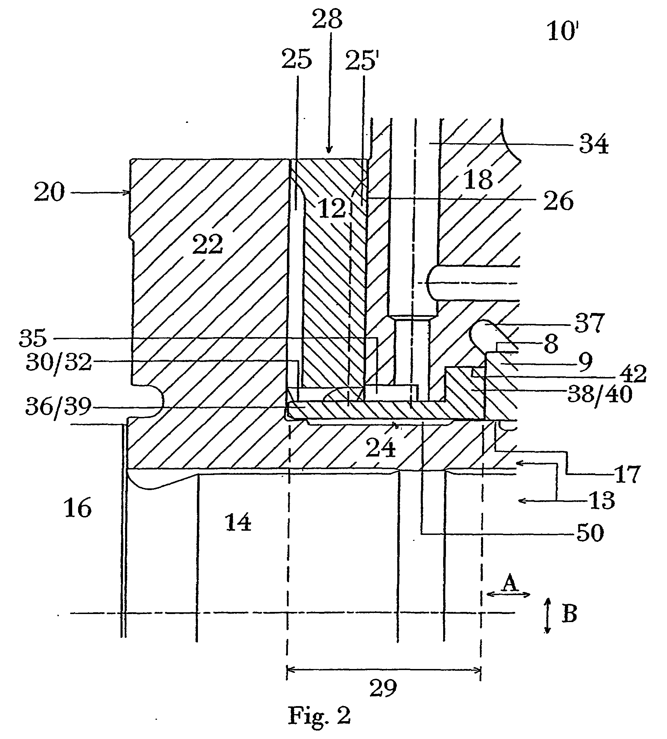

Die Figuren 2 bis 5 zeigen verschiedene Ausführungsformen des erfindungsgemässen hydrodynamischen Axiallagers 10', 10", 10''', 10"", mit einem Grundaufbau der dem aus Fig. 1 bekannten Axiallager 10 entspricht. Im Gegensatz zu dem in Fig. 1 gezeigten Axiallager 10 ist in den Figuren 2 bis 5 die Schwimmscheibe 12 mit ihrer zentralen Kreisöffnung 30 statt auf dem rotierenden Körper 13 auf einem feststehenden Lagerelement 38 radial gelagert. In den Figuren 2 bis 4 ist der Lagerkörper 18 als Gussteil gefertigt; das Lagerelement 38 ist aus Stahl gefertigt und mit einer verschleissresistenten Beschichtung oder Oberflächenbehandlung versehen. Das Lagerelement 38 ist fest mit dem Lagerkörper 18 verbunden und weist ein zylindrisches, sich in Achsrichtung (A) erstreckendes Lagerteil 39 sowie ein im wesentlichen kreisscheibenförmiges Passteil 40 auf, das bezüglich der Achsrichtung (A) senkrecht, radial nach aussen vom Lagerteil 39 absteht. Eine Ausnehmung 42 im Lagerkörper 18, die unmittelbar an die Radiallagerausnehmung 8 des Lagerkörpers 18 angrenzt, bildet einen Presssitz für das Passteil 40 des Lagerelementes 38. Das Lagerteil 39 des Lagerelementes 38 erstreckt sich vom Passteil 40 axial durch den ringnutenförmigen Raum 28 bis zum Vorsprung 22 des Lagerkammes 20. Somit umgibt das Lagerelement 38 auf einem Abschnitt 29 konzentrisch den rotierenden Körper 13 des Axiallagers 10 und bildet mit diesem im Abschnitt 29 einen Entkopplungsspalt 50.

In Figur 2 ist das Lagerelement 38 als geschlossene Büchse 36 ausgebildet und der Entkopplungsspalt 50 als luft- oder ölgefüllter Toleranzspalt. Die Schmierung zwischen Schwimmscheibe 12 und Lagerelement 38 erfolgt mittels Schmieröl, das dem ringnutenförmigen Raum 28 via radialem Zuführkanal 34 und den mit diesem verbundenen Ringkanal 35 zugeführt wird. Das in die Schwimmscheibe 12 integrierte Radiallager 32 ist so ausgestaltet, dass es den Schmieröldurchtritt in den Schmierölspalt 25 zwischen Schwimmscheibe 12 und Vorsprung 22 ermöglicht.

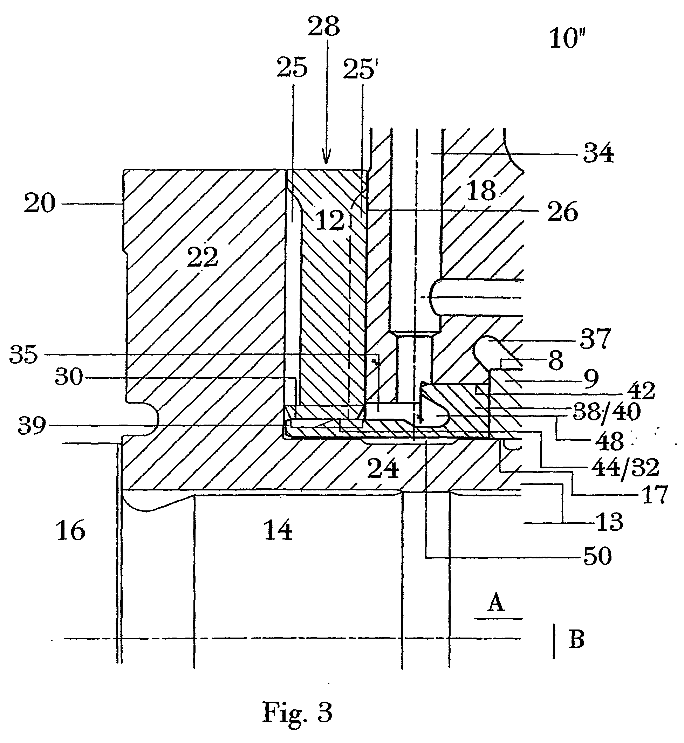

Das in Figur 3 gezeigte hydrodynamische Axiallager 10" ist analog ausgebildet wie das in Figur 2 dargestellte Axiallager 10'. Die radiale Lagerung der Schwimmscheibe 12 erfolgt wiederum auf einem feststehenden Lagerelement 38. Allerdings weist das Passteil 40 des Lagerelementes 38 in diesem Beispiel eine Ausnehmung 48 auf, die ein leichteres Einpassen in den durch die Ausnehmung 42 im Lagerkörper 18 gebildeten Presssitz erlaubt und eine zu grosse Deformation des Lagerelementes 38 verhindert. Ausserdem ist in dem hier gezeigten Beispiel die ringförmige Ausnehmung 48 mit dem Zuführkanal 34 bzw. dem Ringkanal 35 verbunden und dient zugleich als Schmierölreservoir für die Ölschmierung im ringnutenförmigen Raum 28. Statt der Kreisöffnung 30 der Schwimmscheibe 12 ist in diesem Beispiel die der Schwimmscheibe 12 zugewandte Aussenseite 44 des Lagerteils 39 des Lagerelementes 38 als Radiallager 32 ausgebildet. Via die profilierte Aussenseite 44 des Lagerteils 39 ist auch die Schmierölversorgung des zwischen Schwimmscheibe 12 und Vorsprung 22 ausgebildeten Schmierölspaltes 25' gewährleistet.

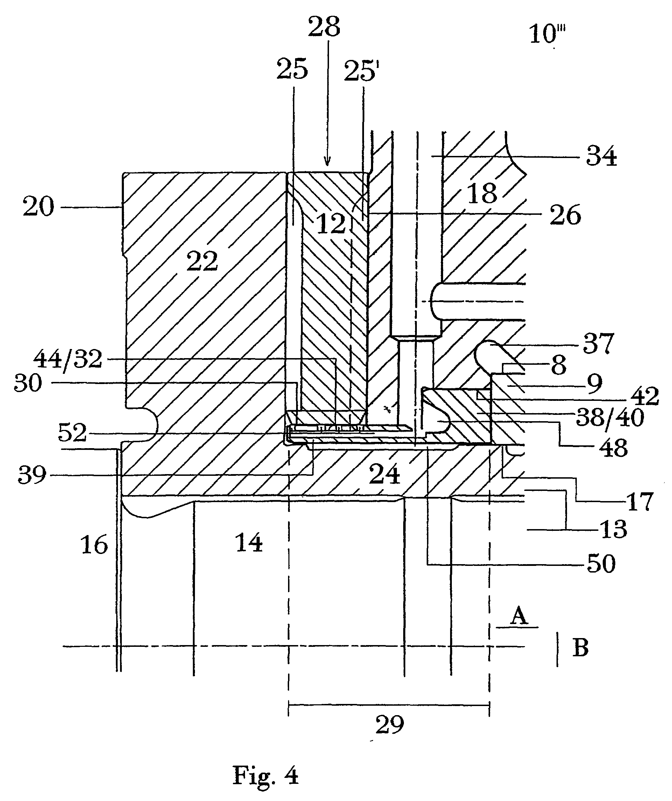

Das Axiallager 10''' in Fig. 4 ist gleich aufgebaut wie das in Fig. 3 gezeigte Axiallager 10". Die Schmierölversorgung das Radiallagers 32 der Schwimmscheibe 12 und der Schmierölspalten 25, 25' ist durch Verbindungsöffnungen 52 sicher gestellt, die im Lagerteil 39 des Lagerelements 38 vorgesehen sind und den ringnutenförmigen Raum 28 mit dem Zuführkanal 34 für das Schmieröl verbinden.

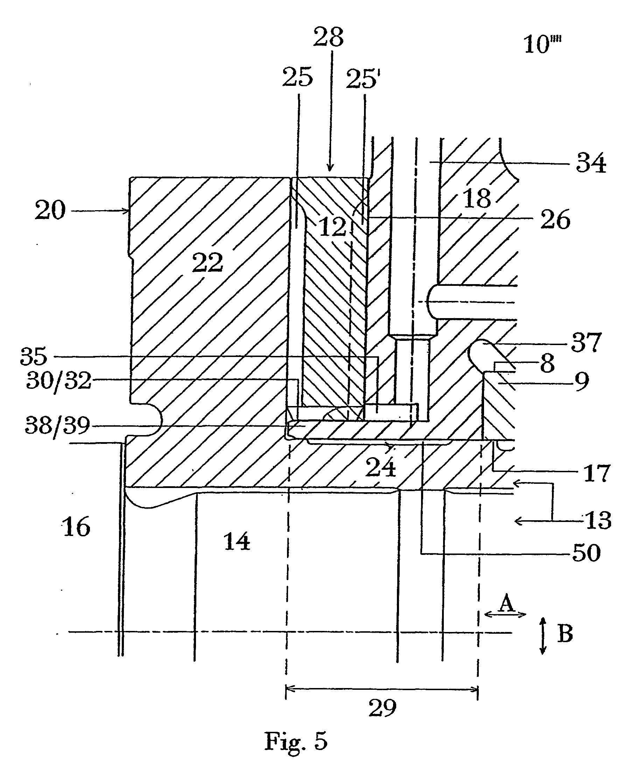

Figur 5 zeigt ein Axiallager 10"", das analog dem Axiallager 10' aus Fig. 2 aufgebaut ist. Es Unterscheidet sich nur dadurch, dass das Lagerelement 38 und der Lagerkörper 18 einstückig, in diesem Beispiel aus Stahl, gebildet sind. Natürlich können auch die in den Figuren 3 und 4 gezeigten Ausführungsbeispiele in Form von einstückig mit dem Lagerkörper 18 verbundenen Lagerelementen 38 ausgebildet sein.

Ausserdem sind verschiedenste weitere Ausgestaltungen des Axiallagers 10', 10", 10''', 10"" möglich. Es können beispielsweise Verbindungsöffnungen 52 zusätzlich zu der in den Fig. 2 bis 4 gezeigtenSchmierölversorgung vorgesehen sein. Der rotierende Körper 13 des hydrodynamischen Axiallagers 10', 10", 10''', 10"", kann beispielsweise auf dem Abschnitt 29 nur aus der Welle 16 bzw. dem Wellenzapfen 14 bestehen. Auch können statt des Lagerkammes 20 mit seinem Teil 24 und dem Vorsprung 22 andere mit der Welle 16 mitrotierende Elemente vorgesehen sein. Der Vorsprung 22 des Lagerkammes 20 kann auch ohne den axialen Teil 24 vorgesehen sein. Der Vorsprung 22 kann auch einstückig mit der Welle 16 bzw. dem Wellenzapfen 14 ausgebildet sein. Das Lagerelement 38 kann beispielsweise ohne radial nach aussen abstehendes Passteil, eher rohrförmig ausgestaltet sein und mittels einer einfachen Schrumpfpassung fest mit dem Lagerkörper 18 verbunden sein. Auch andere Verbindungen, wie z.B. Schweissen sind denkbar. Das Lagerelement 38 kann auch statt mit dem Lagerkörper 18 mit einem anderen feststehenden Element, wie z.B. einem Gehäuseteil, fest verbunden sein. Eine Ausnehmung 48 als Schmierölreservoir kann auch vorgesehen sein, wenn diese nicht für eine Presspassung benötigt wird.

Bei erfindungsgemässer Ausgestaltung des hydrodynamischen Axiallagers 10 verhindert der Entkopplungsspalt 50 zwischen dem rotierenden Körper 13 und dem feststehenden Lagerelement 38 die Übertragung von radialen Schwingungen (Pfeil B) des rotierenden Körpers 13 auf das Radiallager 32 der Schwimmscheibe 12. Die Schwimmscheibe 12 und ihr Radiallager 32 werden durch die Schwingungen nicht belastet und Verschleiss oder gar ein Versagen des Lagers werden verhindert.

### BEZUGSZEICHENLISTE

- 8: Radiallagerausnehmung
- 9: Radiallagerelement
- 10 bis 10"": Hydrodynamisches Axiallager
- 12: Schwimmscheibe
- 13: rotierender Körper
- 14: Lagerzapfen
- 16: Welle
- 17: Radiallager
- 18: Lagerkörper
- 20: Lagerkamm
- 22: Vorsprung
- 24: Teil des Lagerkammes
- 25, 25': Schmierölspalt
- 26: Wand
- 28: ringnutenförmiger Raum
- 29: Abschnitt
- 30: zentrale Kreisöffnung
- 32: Radiallager
- 34: Zuführkanal
- 35: Ringkanal
- 36: Büchse
- 37: Ölkanal
- 38: Lagerelement
- 39: Lagerteil
- 40: Passteil
- 42: Nut
- 44: Aussenseite
- 48: Ausnehmung
- 50: Entkopplungsspalt
- 52: Öffnung

## Patentansprüche

1. Hydrodynamisches Axiallager mit einem Lagerkörper (18), einem in einem Radiallager (17) des Lagerkörpers (18) gelagerten rotierenden Körper (13), der einen mitrotierenden Vorsprung (22) aufweist, und mit einer Schwimmscheibe (12), die in einem ringnutenförmigen Raum (28) zwischen dem Vorsprung (22) und einer Wand (26) des feststehenden Lagerkörpers (18) angeordnet und radial via ein hydrodynamisches Radiallager (32) gelagert ist, **dadurch gekennzeichnet, dass** die Schwimmscheibe (12) radial auf einem feststehenden Lagerelement (38) gelagert ist, welches den rotierenden Körper (13) auf einem Abschnitt (29) konzentrisch umgibt, so dass zwischen dem feststehenden Lagerelement (38) und dem rotierenden Körper (13) im Abschnitt (29) ein Entkopplungsspalt (50) gebildet ist.

2. Hydrodynamisches Axiallager nach Anspruch 1, **dadurch gekennzeichnet, dass** das Lagerelement (38) einstückig mit dem Lagerkörper (18) ausgestaltet ist.

3. Hydrodynamisches Axiallager nach Anspruch 1, **dadurch gekennzeichnet, dass** das Lagerelement (38) und Lagerkörper (18) separate Teile sind und das Lagerelement (38) mit dem Lagerkörper (18) fest verbunden ist und zwar vorzugsweise via eine Presspassung.

4. Hydrodynamisches Axiallager nach Anspruch 3, **dadurch gekennzeichnet, dass** das Lagerelement (38) ein in einen Presssitz passendes Passteil 40 aufweist, in dem insbesondere eine Ausnehmung (48) vorgesehen ist, die vorzugsweise auch als Schmierölreservoir dient.

5. Hydrodynamisches Axiallager nach einem der Ansprüche 1 bis 4, **dadurch gekennzeichnet, dass** das Lagerelement (38) eine geschlossene Büchse (36) ist.

6. Hydrodynamisches Axiallager nach einem der Ansprüche 1 bis 5, **dadurch gekennzeichnet, dass** der Entkopplungsspalt (50) ein luftgefüllter Toleranzspalt ist.

7. Hydrodynamisches Axiallager nach einem der Ansprüche 1 bis 4, **dadurch gekennzeichnet, dass** der ringnutenförmige Raum (28) und die in ihm angeordneten Schmierölspalten (25, 25') sowie das Radiallager (32) via das Lagerelement (38) mit der Schmierölzuführung (34) verbunden ist.

8. Hydrodynamisches Axiallager nach Anspruch 7, **dadurch gekennzeichnet, dass** die beiden Schmierölspalten (25, 25') via ein geeignetes Profil auf der der Schwimmscheibe (12) zugewandten Aussenseite (44) eines Lagerteils (39) des Lagerelementes (38) miteinander verbunden ist.

9. Hydrodynamisches Axiallager nach Anspruch 7 oder 8, **dadurch gekennzeichnet, dass** der ringnutenförmige Raum (28), die Schmierölspalten (25, 25') und das Radiallager (32) via Verbindungsöffnungen (52) im Lagerelement 38 mit der Schmierölzuführung (34) verbunden sind.

## Claims

1. Hydrodynamic axial bearing with a bearing body (18), with a rotating body (13) mounted in a radial bearing (17) of the bearing body (18) and having a corotating projection (22), and with a floating disc (12) which is arranged in an annular-groove-shaped space (28) between the projection (22) and a wall (26) of the fixed bearing body (18) and is mounted radially via a hydrodynamic radial bearing (32), **characterized in that** the floating disc (12) is mounted radially on a fixed bearing element (38) which concentrically surrounds the rotating body (13) on a portion (29), so that an uncoupling gap (50) is formed in the portion (29) between the fixed bearing element (38) and the rotating body (13).

2. Hydrodynamic axial bearing according to Claim 1, **characterized in that** the bearing element (38) is produced in one piece with the bearing body (18).

3. Hydrodynamic axial bearing according to Claim 1, **characterized in that** the bearing element (38) and the bearing body (18) are separate parts and the bearing element (38) is connected fixedly to the bearing body (18), specifically preferably via a press fit.

4. Hydrodynamic axial bearing according to Claim 3, **characterized in that** the bearing element (38) has a fitting part (40) which fits into a press seat and in which, in particular, a recess (48) is provided, said recess also preferably serving as a lubricating-oil reservoir.

5. Hydrodynamic axial bearing according to one of Claims 1 to 4, **characterized in that** the bearing element (38) is a closed bush (36).

6. Hydrodynamic axial bearing according to one of Claims 1 to 5, **characterized in that** the uncoupling gap (50) is an air-filled tolerance gap.

7. Hydrodynamic axial bearing according to one of Claims 1 to 4, **characterized in that** the annular-groove-shaped space (28) and the lubricating-oil gaps (25, 25') arranged in it and also the radial bearing (32) are connected to the lubricating-oil feed (34) via the bearing element (38).

8. Hydrodynamic axial bearing according to Claim 7, **characterized in that** the two lubricating-oil gaps (25, 25') are connected to one another via a suitable profile or that outer face (44) of a bearing part (39) of the bearing element (38) which confronts the floating disc (12).

9. Hydrodynamic axial bearing according to Claim 7 or 8, **characterized in that** the annular-groove-shaped space (28), the lubricating-oil gaps (25, 25') and the radial bearing (32) are connected to the lubricating-oil feed (34) via connecting orifices (52) in the bearing element (38).

## Revendications

1. Palier axial hydrodynamique comprenant un corps de palier (18), un corps en rotation (13) logé dans un palier radial (17) du corps de palier (18), lequel présente une partie en saillie (22) qui tourne en même temps, et muni d'un disque flottant (12) qui est logé dans un espace en forme de rainure annulaire (28) entre la partie en saillie (22) et une paroi (26) du corps de palier fixe (18) et qui est soutenu dans le sens radial par le biais d'un palier radial hydrodynamique (32), **caractérisé en ce que** le disque flottant (12) est logé dans le sens radial sur un élément support fixe (38) qui entoure de manière concentrique le corps en rotation (13) sur une portion (29) de manière à former un interstice de découplage (50) dans la portion (29) entre l'élément support fixe (38) et le corps en rotation (13).

2. Palier axial hydrodynamique selon la revendication 1, **caractérisé en ce que** l'élément support (38) est réalisé d'une seule pièce avec le corps de palier (18).

3. Palier axial hydrodynamique selon la revendication 1, **caractérisé en ce que** l'élément support (38) et le corps de palier (18) sont des pièces séparées et l'élément support (38) est relié à demeure avec le corps de palier (18), et ce de préférence par le biais d'un ajustement serré.

4. Palier axial hydrodynamique selon la revendication 3, **caractérisé en ce que** l'élément support (38) présente une cale d'ajustage (40) ajustée dans un ajustement serré, dans laquelle est notamment prévu un creux (48) qui, de préférence, sert également de réservoir à huile de lubrification.

5. Palier axial hydrodynamique selon l'une des revendications 1 à 4, **caractérisé en ce que** l'élément support (38) est une douille fermée (36).

6. Palier axial hydrodynamique selon l'une des revendications 1 à 5, **caractérisé en ce que** l'interstice de découplage (50) est un interstice de tolérance rempli d'air.

7. Palier axial hydrodynamique selon l'une des revendications 1 à 4, **caractérisé en ce que** l'espace en forme de rainure annulaire (28) et les interstices à huile de lubrification (25, 25') qui se trouvent dans celui-ci ainsi que le palier radial (32) sont reliés à l'arrivée d'huile de lubrification (34) par le biais de l'élément support (38).

8. Palier axial hydrodynamique selon la revendication 7, **caractérisé en ce que** les deux interstices à huile de lubrification (25, 25') sont reliés entre eux par le biais d'un profil approprié sur le côté extérieur (44) d'une partie support (39) de l'élément support (38) qui fait face au disque flottant (12).

9. Palier axial hydrodynamique selon la revendication 7 ou 8, **caractérisé en ce que** l'espace en forme de rainure annulaire (28), les interstices à huile de lubrification (25, 25') et le palier radial (32) sont reliés à l'arrivée d'huile de lubrification (34) par le biais d'ouvertures de liaison (52) dans l'élément support (38).
